# EUROPEAN PATENT APPLICATION

(11) **EP 1 180 739 A1**
(43) Date of publication of application: **20.02.2002**
(21) Application number: 00307015.8
(22) Date of filing: 16.08.2000
(51) Int. Cl.: G06F 17/30

(54) **Page content delivery**

(71) Applicant: Gavoa Ltd, London W140QH (GB)
(72) Inventor: The designation of the inventor has not yet been filed
(74) Representative: Geary, Stuart Lloyd

(57) **Abstract**

A banner, for example, is produced by a banner server (7) by adding data from an information server (9) into a banner image before supplying the banner image to a requesting client (6). The banner image and the source and identity of the added data are both contained in the same content definition entity.

## Description

The present invention relates to a method of operating a server machine to deliver content to a client machine over a network, the method comprising receiving a request for content from a client machine via a network, and transmitting content defined by a content definition entity in response to the request.

Known "content definition entities" are image and audio files.

Advertising by way of "banners" on web pages is ubiquitous on the World Wide Web. Much of this advertising is carried out by Doubleclick, Inc.

Typically, a host web page will contain a link to a Doubleclick server which causes an advertising banner to be incorporated into the page as it is displayed by a web browser. However, the banners are unchanging with time, notwithstanding that they may comprises animated GIF files. The banner will always look the same whenever it is served.

It is an aim of the present invention to provide a system whereby dynamically changing media can be served to users of web browsers or the like.

A method according to the present invention is characterised modifying content from the content definition entity to include matter from a data source after receiving said request.

Preferably, said matter is identified within said entity, which may be, for example a file or a software object or component.

The content preferably comprises a graphical image.

Preferably, the content definition entity includes the identity of a data source and the matter is obtained from the identified data source. More preferably, a method according to the present invention comprises requesting said matter from said data source via a network connection.

Preferably, said content comprises an image, the matter is obtained from said data source as a string of character codes and the matter is converted into a graphical representation of the characters represented by said string before inclusion into said content.

According to the present invention, there is provided an apparatus comprising processing means and network communication means configured for performing a method according to the present invention.

According to the present invention, there is also provided a technical manifestation of content definition entity for use in a method according to the present invention, said entity including a content data element and a data source id.

The technical manifestation of content definition entity may include data identifying said matter.

The technical manifestation may take the form of a magnetic field pattern, features on an optically readable data carrier, an array of electronic memory cells or a signal modulated with a digital representation of the contents of said entity. If the entity is manifested as a signal, the signal may comprise a plurality of packets.

An embodiment of the present invention will now be described, by way of example, with reference to the accompanying drawings, in which: -
Figure 1 shows a web page including a banner;
Figure 2 illustrates the large-scale architecture of a system embodying the present invention;
Figure 3 shows the client machine of Figure 1;
Figure 4 shows the web server machine of Figure 1;
Figure 5 shows the banner server machine of Figure 1;
Figure 6 shows the information server machine of Figure 1;
Figure 7 illustrates a content definition entity;
Figure 8 shows the signalling between the client machine and the server machines of Figure 1; and

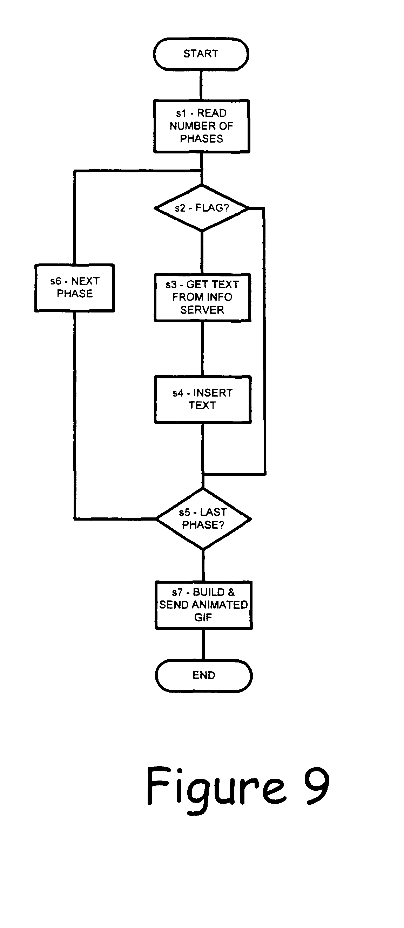

Figure 9 is a flow chart illustrating the operation of the banner server machine of Figure 1.

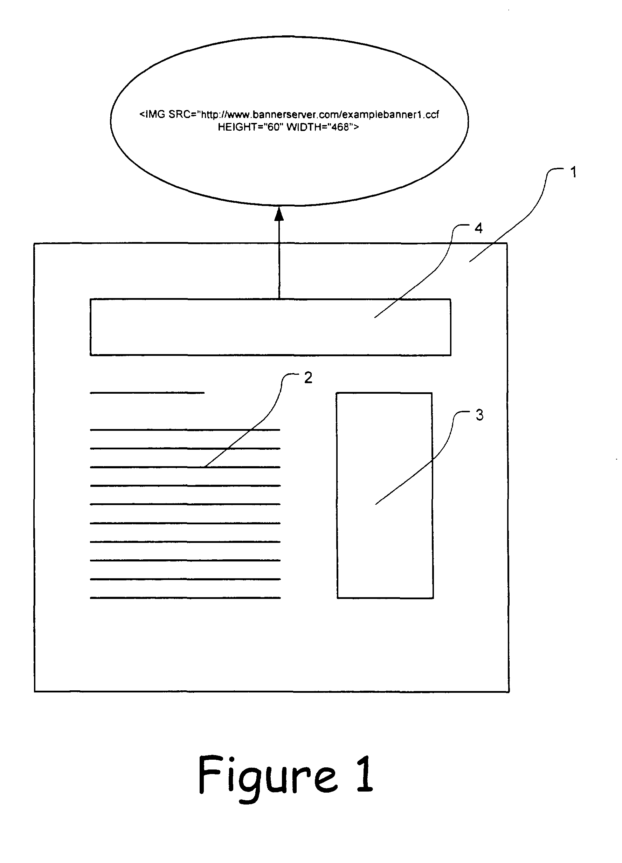

Referring to Figure 1, a web page 1 comprises a body of text 2, an image 3 to the right of the text and an animated banner 4 across the page above the text 2 and the image 3.

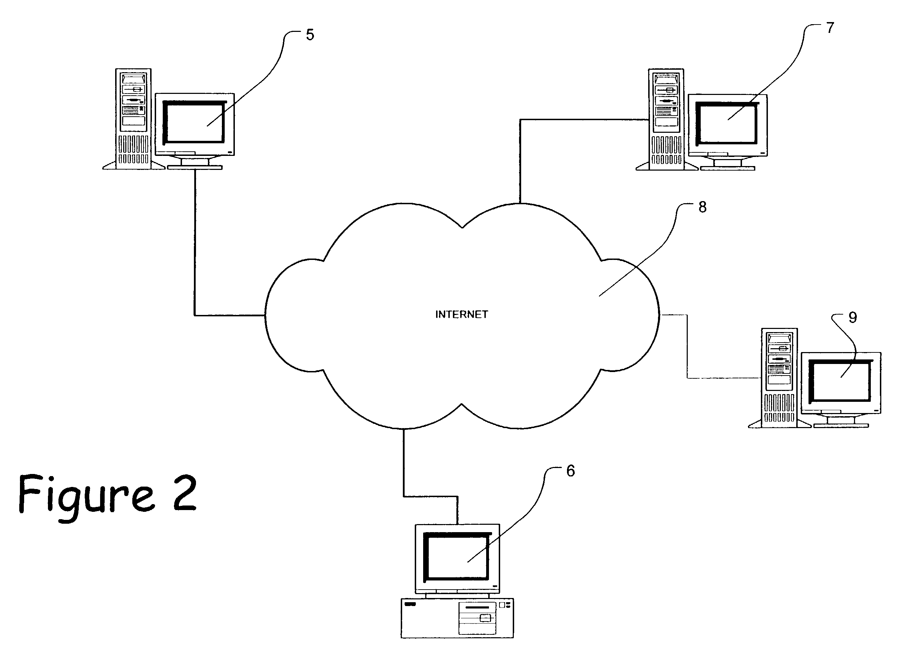

Referring to Figure 2, the web page 1, except for the banner 4, is provided by a web server machine 5 and displayed by a client machine 6. The banner 4 is provided from a banner server machine 7. The communication between the client machine 6 and the portal web server machine 5 and between the client machine 6 and the banner server machine 7 takes place across the Internet 8.

The banner is constructed by the banner server machine 7 using data from an information server machine 9, which it obtains via the Internet 8.

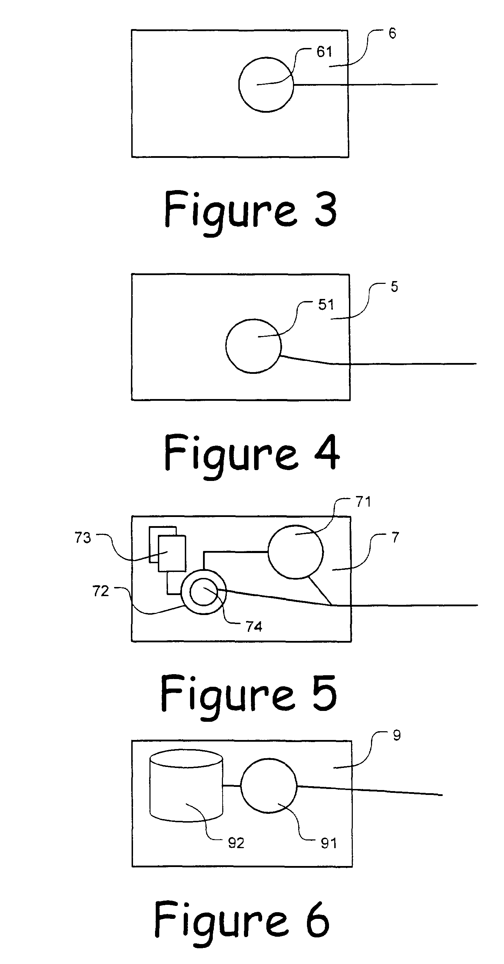

Referring to Figure 3, the client machine 6 is a conventional personal computer running a web browser program 61.

Referring to Figure 4, the web server machine 5 comprises a high-performance computer system running a web server process 51.

Referring to Figure 5, the banner server machine 7 comprises a high-performance computer system running a web server process 71, e.g. Apache, with an associated banner generation module 72. The banner generation module 72 is invoked by the web server process 71 in response to requests containing URLs with a .ccf suffix and has access to a plurality of banner definition files 73. The banner generation module 72 acts as an information retrieval client 74 which establishes a socket connection with the information server machine 9 to obtain information therefrom.

Referring to Figure 6, the information server machine 9 comprises a high-performance computer system running an information server process 91 which is complementary to the information retrieval client of the banner server machine 7. The information server process 91 obtains, at the request of the information retrieval client 74, data from a source thereof, illustrated by a database 92 in Figure 6 although other sources, including measuring instruments, e.g. a thermometer, or a stock market tickertape feed, could be used. The obtained data is then sent to the requesting information retrieval client 74 via the Internet for inclusion in a banner.

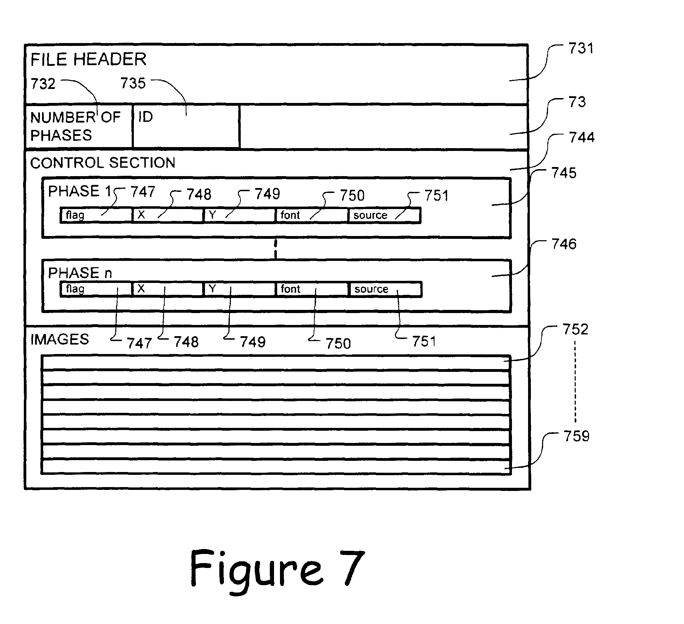

Referring to Figure 7, each banner definition entity 73 has a header 731 containing miscellaneous record data including an indication of the type of content in the content definition entity; in this case graphics. Following the header, come values for the number of phases 732 that the banner passes through and a unique ID 735.

A control section 744 has a subsection 745, 746 for each of the banner's phases. These subsections 745, 746 specify the control logic for the insertion of text 4a (Figure 1) into the image for a respective phase. Each subsection 745, 746 has a flag 747 indicating whether text is to be added to the selected image, X and Y coordinates 748, 749 specifying the position of text to be added, a font definition 750, including font name, colour, size, whether bold, italic or underlined, and a source id 751 identifying the source of the text to be inserted. This source id may comprise an IP address and a data id, e.g. 192.168.1.12:ATTQUOTE. The IP address identifies an information server machine 9 and the data id is for identifying the information to be returned to the information server machine 9.

Finally, the entity 73 has a plurality of images 752, ..., 759; one for each phase.

The process of delivering web pages similar to that shown in Figure 1 to the client machine 6 will now be described.

When a user of the client machine 6 wishes to view a page 1 from the web server machine 5. The web page 1 includes an <IMG ...> tag (see Figure 1) which contains a URL with the address of the banner server machine 7 and the suffix ".ccf".

When the web server process 71 at the banner server machine 7 receives the request from the client machine 6, it invokes the banner generation module 71 which adds information from the information server machine 9 to the images in the identified banner definition entity, i.e. ".ccf" file.

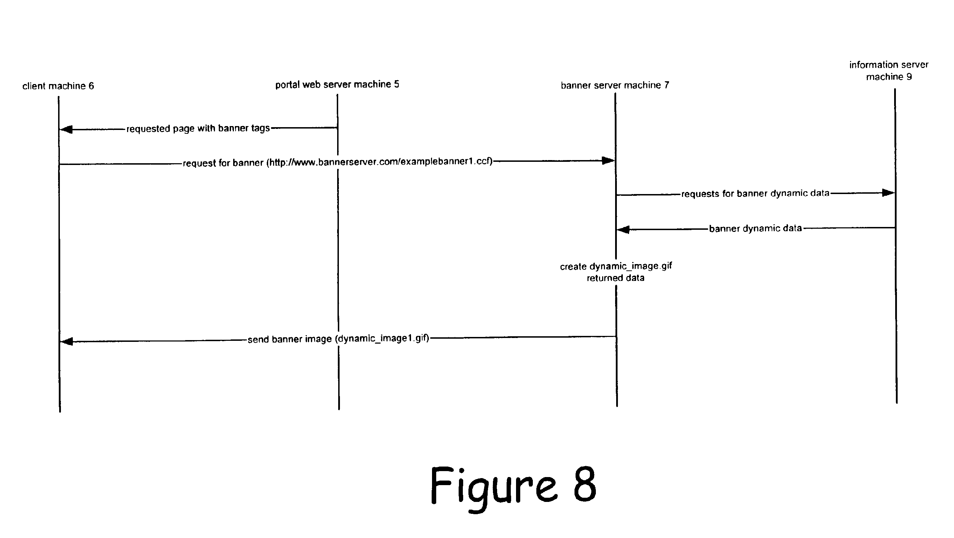

Referring to Figure 8, the banner generation module 72 reads the number of phases 732 from the banner definition entity 73 (step s1) and then, for each phase (steps s5 and s6) of the identified banner definition entity 73, the module 72 determines whether the flag 747 is set (step s2). If the flag 747 is not set, the banner generation module 72 does not process the image for the current phase. However, if the flag 747 is set, the banner generation module 72 sends a request for information, containing the data id from the source id 751, to the information server process 91 which is identified by the IP address in the source id 751 and a pre-determined port number gets (step s3). The information server process 91 returns a string which it then inserts into the image for the current phase at the position indicated by the coordinates, using the specified font, or a default font if the specified font is not available (step s4). Thus, the added data, be it a stock quote, a temperature or football score, is always the most recent value available to the information server process 91.

When the processing is complete (step s5), the banner generation module 72 combines the images into an animated "gif" file which is stored in a temporary location and then reads and "prints" the animated "gif" file byte-by-byte to the web browser 61 at the client machine 6, together with the appropriate http header (Content-type: image/gif) (step s7).

The animated gif image is then displayed to the user as a banner 4, including data from the information server machine 9, on the requested web page.

It will be appreciated that many modifications may be made to the exemplary embodiment described above. Firstly, it will be apparent that the present invention is not restricted to the serving of banner images and that other customised image formats or customised audio may be provided instead of banners. The content, be it banners or other image types or audio, need not all be served from the same site. Similarly, each image may contain data from a plurality of data sources.

The data sources may be separate data sourcing machines, as in the example described above. However, the data sourcing could be provided at the content serving machine, e.g. provision of date, time, number of request for content etc.. In this case, the data could be supplied to the content serving machine as parameters of a POST or GET method, associated with the URL requesting the content, and stored for adding into the served content.

A plurality of content elements, banners etc., may be incorporated in one document.

## Claims

1. A method of operating a server machine to deliver content to a client machine over a network, the method comprising receiving a request for content from a client machine via a network, and transmitting content defined by a content definition entity in response to the request, **characterised by** modifying content from the content definition entity to include matter from a data source after receiving said request.

2. A method according to claim 1, wherein said matter is identified within said entity.

3. A method according to claim 1 or 2, wherein said content comprises a graphical image.

4. A method according to claim 1, 2 or 3, wherein the content definition entity includes the identity of a data source and the matter is obtained from the identified data source.

5. A method according to claim 4, comprising requesting said matter from said data source via a network connection.

6. A method according to any preceding claim, wherein said content comprises an image, the matter is obtained from said data source as a string of character codes and the matter is converted into a graphical representation of the characters represented by said string before inclusion into said content.

7. An apparatus comprising processing means and network communication means configured for performing an method according to any one of claims 1 to 6.

8. A technical manifestation of content definition entity for use in a method according to any one of claims 1 to 6, said entity including a content data element and a data source id.

9. A technical manifestation of content definition entity according to claim 8, including data identifying said matter.

10. A technical manifestation according to claim 8 or 9, comprising a magnetic field pattern.

11. A technical manifestation according to claim 8 or 9, comprising features on an optically readable data carrier.

12. A technical manifestation according to claim 8 or 9, comprising an array of electronic memory cells.

13. A technical manifestation according to claim 8 or 9, comprising a signal modulated with a digital representation of the contents of said entity.

14. A technical manifestation according to claim 13, wherein said signal comprises a plurality of packets.
